# EUROPÄISCHE PATENTSCHRIFT

(11) **EP 3 375 250 B1**
(45) Veröffentlichungstag und Bekanntmachung des Hinweises auf die Patenterteilung: **23.03.2022**
(21) Anmeldenummer: 16797762.8
(22) Anmeldetag: 28.10.2016
(51) Int. Cl.: H05B 3/06

(54) **VORRICHTUNG FÜR EIN HEIZGERÄT FÜR EIN FAHRZEUG**
DEVICE FOR A HEATING MEANS FOR A VEHICLE
DISPOSITIF POUR UN ELEMENT DE CHAUFFAGE POUR UN VEHICLE

(30) Priorität: 09.11.2015 DE 102015119252
(43) Veröffentlichungstag der Anmeldung: 19.09.2018
(73) Patentinhaber: Webasto SE, 82131 Stockdorf (DE)
(72) Erfinder: HOLZWARTH, Achim, 82131 Stockdorf (DE); BUCKL, Stephan, 82131 Stockdorf (DE); KLINKMÜLLER, Tino, 82131 Stockdorf (DE); SCHMIDMAYER, Andreas, 82131 Stockdorf (DE); REUTER, Andreas, 82131 Stockdorf (DE); KABELITZ, Thorsten, 82131 Stockdorf (DE); GÖTTL, Karl, 82131 Stockdorf (DE); ECKERT, Daniel, 82131 Stockdorf (DE)
(74) Vertreter: Epping - Hermann - Fischer
(86) Internationale Anmeldenummer: PCT/EP2016/076150
(87) Internationale Veröffentlichungsnummer: WO 2017/080856

(56) Entgegenhaltungen:
- WO-A1-2012/066112
- FR-A1- 2 371 116
- US-A- 2 600 485
- US-A- 2 644 066

## Beschreibung

Die Erfindung betrifft eine Vorrichtung für ein Heizgerät für ein Fahrzeug, insbesondere für ein elektrisches Heizgerät.

In Kraftfahrzeugen werden Heizgeräte eingesetzt, um den Innenraum des Kraftfahrzeugs zu erwärmen. Hierbei werden auch elektrische Widerstandsheizgeräte eingesetzt. Diese weisen eine Heizleiterschicht auf, die sich beim Anlegen einer elektrischen Spannung erwärmt. Dazu muss die Heizleiterschicht im Betrieb mit einer Spannungsquelle elektrisch verbunden sein.

Dokument WO 2012/066112 A1 betrifft eine Fahrzeugscheibe eines Fahrzeugs, die eine elektrisch leitfähige, heizbare Beschichtung sowie Anschlusselektroden aufweist.

US 2,644,066 A betrifft ein Flächenheizelement mit Anschlusselektroden.

FR 2371116 A1 betrifft einen beheizten Spiegel. Eine elektrische Kontaktierung einer Heizleiterschicht erfolgt mittels einer Klemme.

US 2,600,485 A betrifft eine elektrische Heizvorrichtung mit einem aus einer dünnen, flexiblen Metallfolie bestehenden Verbindungselement.

Es ist wünschenswert, eine Vorrichtung für ein Heizgerät für ein Fahrzeug anzugeben, die einen verlässlichen Betrieb ermöglicht.

Gemäß einer Ausführungsform der Erfindung ist eine Vorrichtung für ein Heizgerät für ein Fahrzeug laut des Anspruchs 1. Diese Vorrichtung weist einen Schichtstapel auf. Der Schichtstapel weist eine Heizleiterschicht auf. Der Schichtstapel weist in einer Stapelrichtung auf der Heizleiterschicht eine elektrisch leitfähige Schicht auf. Die elektrisch leitfähige Schicht bildet einen Kontaktbereich aus, insbesondere einen Kontaktbereich für die Heizleiterschicht zum Verbinden mit einer Spannungsquelle. In Projektion in der Stapelrichtung ist eine Kontur der elektrisch leitfähigen Schicht vorgegeben, um einen Hitzestau an der elektrisch leitfähigen Schicht zu vermeiden. Die Kontur ist vorgegeben durch:
- einen vorgegebenen Abstand zu einer Trennfuge der Heizleiterschicht; und
- eine Vorderseite der elektrisch leitfähigen Schicht, die einem Mittelbereich der Heizleiterschicht zugewandt ist, zwei konvexe Abschnitte aufweist, die jeweils in Richtung des im Betrieb auftretenden Stromflusses gewölbt sind.

Die Breite, der Abstand und/oder die Krümmung sind so vorgegeben, dass im Betrieb auch bei einem Stromfluss von beispielsweise 10 Ampere oder mehr, beispielsweise bis zu 20 Ampere oder bis zu 30 Ampere, eine ausreichend geringe Stromdichte an dem Kontaktbereich erreicht wird. Somit ist es möglich, im Betrieb Temperaturen, die an der elektrisch leitfähigen Schicht auftreten, unter einem vorgebebenen maximalen Wert zu halten. Der vorgegebene maximale Wert ist beispielsweise 250 °C. Gemäß weiteren Ausführungsformen ist der vorgegebene maximale Wert beispielsweise 200 °C oder 195 °C.

Insbesondere sind die Breite, der Abstand und die Krümmung in Abhängigkeit von einander so vorgegeben, dass im Betrieb der maximale Wert für die Temperatur nicht überschritten wird beziehungsweise nicht für einen längeren Zeitraum überschritten wird. Somit ist es möglich mittels der Vorgabe für die Kontur Hitzestaus zu vermeiden. Ein Vermeiden eines Hitzestaus bedeutet insbesondere, dass in den unmittelbar benachbarten Bereichen der elektrisch leitfähigen Schicht die Temperaturen im Betrieb unter dem Maximalwert für die Temperatur bleiben.

Beispielsweise wird die Breite möglichst groß vorgegeben, jedoch bevorzugt nur so breit, dass der vorgegebene Abstand noch eingehalten wird. In Abhängigkeit der Breite und dem vorgegebenen Abstand wird beispielsweise die Krümmung vorgegeben. Die Breite und die Krümmung werden insbesondere so vorgegeben, dass sich der Kontaktbereich in Richtung einer Leiterbahn der Heizleiterschicht erstreckt.

Dadurch, dass die Kontur der elektrisch leitfähigen Schicht durch die Breite, den Abstand und/oder die Krümmung vorgegeben ist, ist es möglich einen Hitzestau (englisch: hot spot) zu vermeiden, an dem Temperaturen auftreten, die so groß sind, dass sie einen verlässlichen Betrieb des Heizgeräts beeinträchtigen können.

Gemäß Ausführungsformen ist in der Projektion in Stapelrichtung entlang der Vorderseite die vorgegebene Krümmung mittels zwei zueinander unterschiedlicher vorgegebener Radien für die Vorderseite vorgegeben. Somit ist es insbesondere möglich, einen in der Projektion mittleren Bereich der Vorderseite mit einem größeren Radius auszubilden. Beispielsweise nähert sich der mittlere Bereich der Vorderseite einer Geraden an. Die beiden seitlichen Bereiche weisen einen kleineren Radius auf, so dass diese stärker gekrümmt sind. Hierdurch ist der Kontaktbereich in Richtung der Leiterbahn der Heizleiterschicht geführt. Der Kontaktbereich ist so ausgeformt, dass er einen vorspringenden Bereich in Richtung eines Stromflusses aufweist, der im Betrieb von dem Kontaktbereich zu der Heizleiterschicht fließt. Dadurch ist es möglich, dass sich die Feldlinien des im Betrieb entstehenden elektrischen Feldes möglichst wenig konzentrieren und somit eine geringe Stromdichte realisiert ist.

Gemäß Ausführungsformen weist die die Vorderseite in der Projektion in der Stapelrichtung einen gerade verlaufenden Abschnitt auf. Insbesondere ist der gerade verlaufende Abschnitt in einem mittleren Bereich der Vorderseite angeordnet. Beidseitig des gerade verlaufenden Abschnitts sind gemäß Ausführungsformen die gekrümmten Bereiche vorgesehen, die einen oder mehrere vorgegebene Radien aufweisen.

Gemäß weiteren Ausführungsformen weist die Vorderseite einen konkaven und einen konvexen Abschnitt auf. Damit ist es möglich, den Kontaktbereich in Richtung der Leiterbahn der Heizleiterschicht zu erstrecken und dennoch einen ausreichend großen Abstand zu der Trennfuge einzuhalten.

Gemäß weiteren Ausführungsformen verjüngt sich in der Projektion in der Stapelrichtung eine Breite der elektrisch leifähigen Schicht ausgehend von der Breite der Vorderseite zumindest in einem Teilbereich der elektrisch leitfähigen Schicht.. Die Breite der Vorderseite in der Projektion ist beispielsweise größer ausgebildet als eine maximale Breite der restlichen elektrisch leitfähigen Schicht. Die elektrisch leitfähige Schicht ist in der Projektion in Richtung des Stromflusses, der im Betrieb auftritt, breiter ausgebildet als stromaufwärts. Somit ist es möglich, eine ausreichend niedrige Stromdichte zu realisieren.

Gemäß weiteren Ausführungsformen weist die Vorrichtung einen Leitungsstreifen aus einem elektrisch leitfähigen Material auf. Die Vorrichtung weist eine Verbindung auf, die die elektrisch leitfähige Schicht und den Leitungsstreifen miteinander verbindet, um mittels des Leitungsstreifens einen elektrischen und/oder mechanischen Kontakt an die elektrisch leitfähige Schicht zu bilden. Der Leitungsstreifen dient beispielsweise als elektrische und/oder mechanische Kontaktschnittstelle an die elektrisch leitfähige Schicht. Mittels des Leitungsstreifens ist es möglich, eine Spannung an die elektrisch leitfähige Schicht und damit die Heizleiterschicht anzulegen. Der Leitungsstreifen ist beispielsweise mittels weiterer Leitungen mit einem Stromnetz des Kraftfahrzeugs verbindbar. Beispielsweise ist die Verbindung des Leitungsstreifens mit der elektrisch leitfähigen Schicht eine Schweißverbindung. Der Leitungsstreifen ist gemäß Ausführungsformen an die elektrisch leitfähige Schicht angeschweißt. Der Leitungsstreifen weist beispielsweise Kupfer auf oder ist aus einer Kupferlegierung gebildet.

Gemäß Ausführungsformen ist der Abstand zu der Trennfuge vorgegeben in Abhängigkeit von einer Breite einer Leiterbahn der Heizleiterschicht quer zur Stapelrichtung. Insbesondere ist die Breite der Leiterbahn vorgegeben, um im Betrieb eine verlässliche Heizleistung zu realisieren. In Abhängigkeit der Breite der Leiterbahn wird der Abstand zur Trennfuge so vorgegeben, dass Hitzestaus im Betrieb vermieden werden.

Gemäß weiteren Ausführungsformen ist eine der Heizleiterschicht abgewandte Fläche der elektrisch leitfähigen Schicht größer als eine Kontaktfläche, in der der Leitungsstreifen in Kontakt ist mit der elektrisch leitfähigen Schicht. Der Kontaktbereich, der von der elektrisch leitfähigen Schicht ausgebildet ist, ist größer, als der Bereich des Leitungsstreifens, der mit der Heizleiterschicht die gemeinsame Kontaktfläche ausbildet. Dies trägt weiter dazu bei, dass im Betrieb Hitzestaus vermieden werden.

Gemäß Ausführungsformen ist die elektrisch leitfähige Schicht eine thermisch gespritzte elektrisch leitfähige Schicht. Insbesondere weist die elektrisch leitfähige Schicht Kupfer auf. Beispielsweise ist die elektrisch leitfähige Schicht eine thermisch gespritzte Kupferschicht. Gemäß Ausführungsformen ist die Heizleiterschicht eine thermisch gespritzte Heizleiterschicht. Somit ist eine einfache Möglichkeit zur Herstellung der elektrisch leitfähigen Schicht und/oder der Heizleiterschicht realisiert.

Mit der Vorrichtung ist es möglich, den Kontaktbereich für die Heizleiterschicht so auszubilden, dass im Betrieb ein ausreichend hoher Stromfluss möglich ist und dabei keine oder nahezu keine Hitzestaus auftreten.

Weitere Vorteile, Merkmale und Weiterbildungen ergeben sich aus den nachfolgenden in Verbindung mit den Figuren erläuterten Beispielen.

Gleiche, gleichartige und gleichwirkende Elemente können figurenübergreifend mit den gleichen Bezugszeichen versehen sein.

Es zeigen:
Figur 1 eine schematische Aufsicht auf eine Vorrichtung gemäß einer Ausführungsform,
Figur 2 eine schematische Darstellung einer Schnittansicht der Vorrichtung gemäß einer Ausführungsform,
Figur 3 eine schematische Darstellung einer Schnittansicht der Vorrichtung gemäß einer Ausführungsform,
Figur 4 eine schematische Darstellung eines Kontaktbereichs einer Ausführungsform,
Figur 5 eine schematische Detailansicht eines Ausschnitts einer Vorrichtung gemäß einer Ausführungsform,
Figur 6 eine schematische Aufsicht auf eine Vorrichtung gemäß einer Ausführungsform,
Figur 7 eine schematische Aufsicht auf eine Vorrichtung gemäß einer Ausführungsform, und
Figur 8 eine schematische Aufsicht auf eine Vorrichtung gemäß einer Ausführungsform.

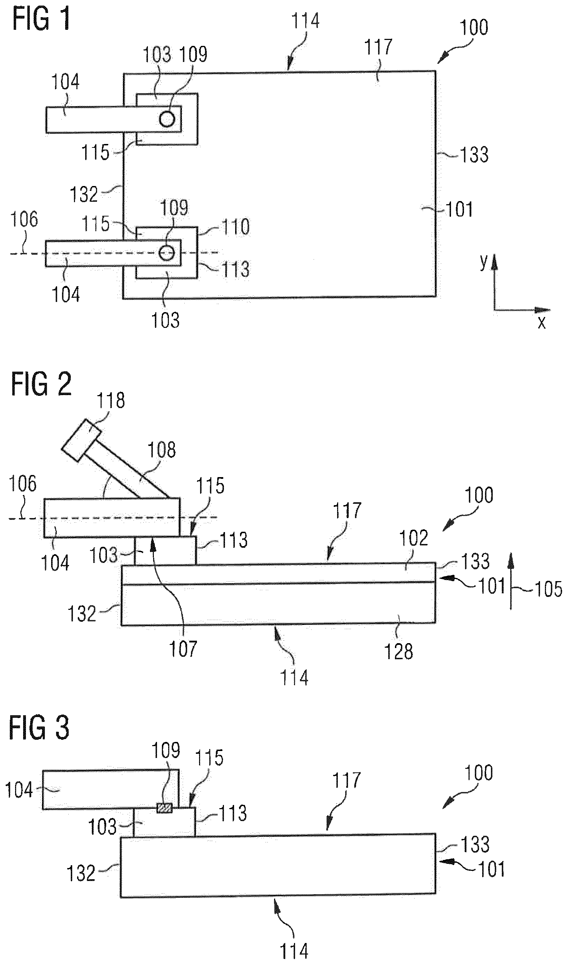

Figur 1 zeigt eine schematische Aufsicht auf eine Vorrichtung 100. Insbesondere zeigt Figur 1 eine Projektion der Vorrichtung 100 auf die x-y-Ebene. Die Vorrichtung 100 ist insbesondere Teil eines Heizgeräts für ein Kraftfahrzeug. Das Heizgerät ist ein elektrisches Heizgerät, das Wärme erzeugt, wenn im Betrieb eine Spannung angelegt wird.

Die Vorrichtung 100 weist einen Schichtstapel 101 auf. Der Schichtstapel 101 weist eine Heizleiterschicht 102 auf. Die Heizleiterschicht 102 ist aus einem Material gebildet, das sich beim Anlegen einer elektrischen Spannung erwärmt. Die Heizleiterschicht 102 ist insbesondere mittels thermischen Spritzen hergestellt. Gemäß weiteren Ausführungsbeispielen ist die Heizleiterschicht mittels eines anderen Verfahrens hergestellt, das dazu geeignet ist, das leitfähige Material für die Heizleiterschicht auf weitere Schichten 128 (Figur 2) des Schichtstapels 102 aufzubringen. Die Heizleiterschicht 102 weist insbesondere Nickel-Chrom (NiCr) auf.

Auf einen Teil einer Oberfläche 117 der Heizleiterschicht 102 ist eine elektrisch leitfähige Schicht 103 aufgebracht. Die elektrisch leitfähige Schicht 103 ist insbesondere in zwei oder mehreren Teilbereichen der Oberfläche 117 aufgebracht, um Kontaktbereiche für die Heizleiterschicht 102 auszubilden.

Die elektrisch leitfähige Schicht 103 ist insbesondere mittels eines thermischen Spritzprozesses aufgebracht, insbesondere mittels eines atmosphärischen Plasmaspritzens. Gemäß weiteren Ausführungsbeispielen ist die elektrisch leitfähige Schicht 103 mittels einem anderen Herstellungsverfahren aufgebracht. Die elektrisch leitfähige Schicht 103 weist Kupfer oder eine Kupferlegierung auf. Gemäß weiteren Ausführungsbeispielen wird ein anderes ausreichend gut elektrisch leitfähiges Material für die elektrisch leitfähige Schicht 103 verwendet.

An der elektrisch leitfähigen Schicht 103 ist ein Leitungsstreifen 104 stoffschlüssig angebracht. Der Leitungsstreifen 104 ist insbesondere mittels einer Schweißverbindung 109 mit der elektrisch leitfähigen Schicht 103 verbunden. Auch andere Verbindungsarten sind möglich, beispielsweise ein Lötverbindung.

Wie sich aus Figur 2 ergibt, wird zum Ausbilden der Schweißverbindung ein Laserstrahl 108 eines Lasers 118 so eingestrahlt, dass sich die Verbindung 109 ausbildet.

Wie sich ebenfalls aus Figur 2 ergibt ist in einer Stapelrichtung 105 die elektrisch leitfähige Schicht 103 auf der Oberfläche 117 der Heizleiterschicht 102 angeordnet. Quer zu der Stapelrichtung 105 erstreckt sich eine Längsrichtung 106.

Die elektrisch leitfähige Schicht 103 weist eine Vorderseite 113 auf, die sich im Querschnitt in Richtung der Stapelrichtung 105 und quer zur Längsrichtung 106 erstreckt. Die Vorderseite 113 ist einem Mittelbereich 114 der Heizleiterschicht 102 zugewandt. Der Mittelbereich 114 entlang der Längsrichtung 106 ist zwischen zwei Außenkanten 132 und 133 angeordnet. Der Mittelbereich 114 ist entlang der Längsrichtung 106 in etwa in der Mitte der Oberfläche 117 angeordnet. Eine Hauptausbreitungsrichtung der Vorderseite 113 verläuft im Koordinatensystem der Figur 1 entlang der y-Richtung. Die Vorderseite 113 ist die Seite der elektrisch leitfähigen Schicht 103, die der näher liegenden Außenkante 132 abgewandt ist. Die Vorderseite 113 ist der weiter entfernt liegenden weiteren Außenkante 133 zugewandt. Die beiden Außenkanten 132 und 133 verlaufen jeweils im Wesentlichen in y-Richtung.

Eine Oberfläche 115 der elektrisch leitfähigen Schicht 103 ist der Oberfläche 117 der Heizleiterschicht 102 abgewandt und erstreckt sich quer zur Stapelrichtung 105. An der Oberfläche 115 ist eine Kontaktfläche 107 ausgebildet, an der die elektrisch leitfähige Schicht 103 und der Leitungsstreifen 104 in Kontakt zueinander sind. Die Oberfläche 115 der elektrisch leitfähigen Schicht 103 ist größer als die Kontaktfläche 107.

Figur 3 zeigt die Vorrichtung 100, bei der die Schweißverbindung 109 ausgebildet ist, im Querschnitt.

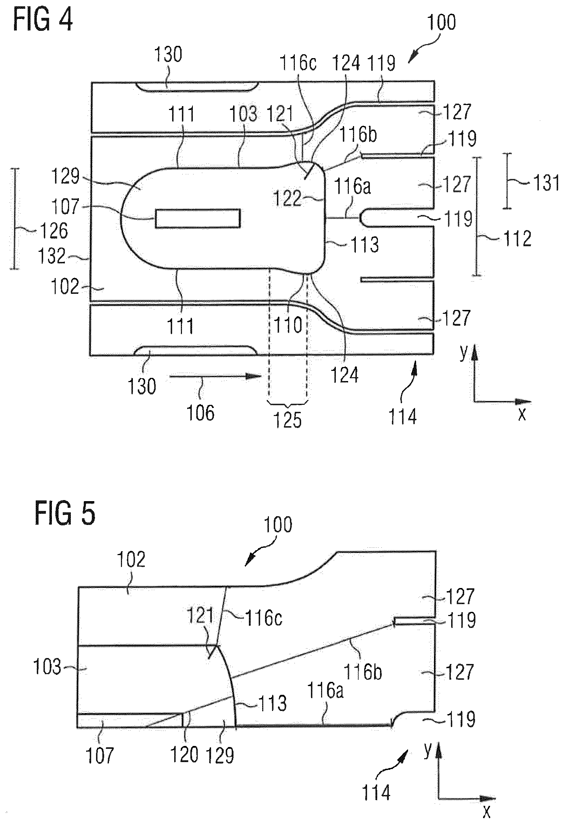

Wie detaillierter in Zusammenhang mit den Figuren 4 bis 8 erläutert, weist die elektrisch leitfähige Schicht 103 in Projektion in Stapelrichtung 105 eine vorgegebene Kontur 110 auf, insbesondere einer der Kontaktbereiche, die mittels der elektrisch leitfähigen Schicht ausgebildet sind. Figuren 4 bis 8 zeigen jeweils die Projektion der Vorrichtung 100 in Stapelrichtung 105 auf die x-y-Ebene.

Figur 4 zeigt einen Ausschnitt einer Aufsicht auf die Vorrichtung 100. Die Vorrichtung 100 gemäß Figur 4 weist einen mittleren Kontaktbereich 129 auf, der mittels der elektrisch leitfähigen Schicht 103 gebildet ist. Die Vorrichtung 100 weist zwei weitere Kontaktbereiche 130 auf, die ebenfalls jeweils mittels der elektrisch leitfähigen Schicht 103 ausgebildet sind. Gemäß weiteren Ausführungsformen sind mehr oder weniger Kontaktbereiche vorgesehen, jedoch zumindest zwei Kontaktbereiche 129 und 130, sodass ein Heizkreis der Heizleiterschicht 102 mit einem Pluspol und einem Minuspol einer Spannungsquelle verbunden werden kann.

Die Vorrichtung 100 gemäß Figur 4 weist zwei Heizkreise auf, die jeweils mit dem Kontaktbereich 129 und einem der weiteren Kontaktbereiche 130 verbunden sind. Es können auch mehr als zwei Heizkreise vorgesehen sein. Entsprechend sind dann mehr als zwei weitere Kontaktbereiche 130 vorgesehen.

Insbesondere ist die Kontur 110 des Kontaktbereichs 129 vorgegeben. Die Kontur der weiteren Kontaktbereiche 130 ist gemäß Ausführungsformen unterschiedlich zu der Kontur 110 des Kontaktbereichs 129 ausgebildet.

Die Kontur 110 des Kontaktbereichs 129 ist vorgegeben mittels einer Breite 112 an der Vorderseite 113. Zudem ist die Kontur 110 vorgegeben durch einen Radius 121, der eine Krümmung der Kontur 110 vorgibt, insbesondere einen Übergang zu einer Seite 111. Die Seite 111 verläuft entlang der Längsrichtung 106 quer zur Vorderseite 113. Die Kontur 110 ist zudem vorgegeben mittels eines Abstands 116 des Kontaktbereichs 129 zu einer Trennfuge 119. Die Trennfuge 119 teilt die Heizleiterschicht 102 in mehrere Leiterbahnen 127 auf. Sind mehrere Trennfugen 119 benachbart zu dem Kontaktbereich 129 angeordnet, wie beispielsweise in der Figur 4 drei Trennfugen 119 im oberen Bereich, der zum ersten Heizkreis gehört, wird jeweils ein Abstand 116a, 116b und 116c zwischen dem Kontaktbereich 129 und der jeweiligen Trennfuge 119 vorgegeben. Der Abstand 116 ist insbesondere der Abstand zwischen der Außenkante der Trennfuge 119, die dem Kontaktbereich 119 zugewandt ist, und der Außenkante des Kontaktbereichs 129, die der Trennfuge 119 zugewandt ist.

Der Kontaktbereich 129 weist eine Breite 126 auf. Die Breite 126 verjüngt sich ausgehend von der Vorderseite 113 entlang der Seite 111 in einem Teilbereich 125. Entlang der Längsrichtung 106 weitet sich der Kontaktbereich 129 somit auf. Die Breite 112 der Vorderseite 113 ist größer als die Breite 126 des Kontaktbereichs 129 an einem der Vorderseite 113 abgewandten Ende des Teilbereichs 125. Somit ist es möglich, dass die Kontur 110 im Bereich der Vorderseite 113 einem Verlauf der beiden direkt Trennfugen 119 folgt, die beginnend an der Außenkante 132 in Richtung der Außenkante 133 direkt neben dem Kontaktbereich 129 verlaufen und einen gekrümmten Verlauf aufweisen. Diese beiden Trennfugen 119 verlaufen so, dass sich ein Bereich der Heizleiterschicht 102, der zwischen diesen beiden Trennfugen 119 angeordnet ist, im Bereich der Vorderseite 113 hin zu den Leiterbahnen 127 aufweitet.

Beispielsweise ist der Kontaktbereich 129 an seinem dem Mittelbereich 114 abgewandten Ende schmäler ausgebildet als an seinem dem Mittelbereich 114 zugewandten Ende. Dies ist beispielsweise vorgegeben durch den Radius 121 und die Breite 112.

Die Kontur 110, die insbesondere bestimmt ist durch die Breite 112, den Radius 121 und den Abstand 116, wird so vorgegeben, dass im Betrieb während Strom durch den Kontaktbereich 129 in die Heizleiterschicht 102 fließt, sogenannte Hotspots (Hitzestaus) vermieden werden. Die Kontur 110 wird so vorgegeben, dass im Betrieb eine maximale Temperatur unterhalb eines vorgegebenen Maximalwerts bleibt, insbesondere an dem Kontaktbereich 129 und den unmittelbar angrenzenden Bereichen der Heizleiterschicht 102. Auch bei Hochvoltanwendungen im Kraftfahrzeugbereich, von beispielsweise bis zu 100 V, und einem Stromfluss von bis zu 30 A, ist es somit möglich, die Temperatur unterhalb von 220 °C, beispielsweise unterhalb von 210 °C, insbesondere unterhalb von 200 °C zu halten. Somit ist ein verlässlicher Betrieb des Heizgeräts möglich und Materialschwächungen können vermieden werden.

Wie sich aus Figur 5 ergibt, ist die Kontur 110, insbesondere im Bereich der Vorderseite 113, gemäß Ausführungsbeispielen durch den Radius 121 und einen weiteren Radius 120 vorgegeben. Insbesondere ist der weitere Radius 120, der einen mittleren Bereich der Vorderseite 113 definiert, größer als der Radius 121, der die beiden seitlichen Bereiche am Übergang zu den Seiten 111 definiert. Beispielsweise ist der weitere Radius 120 11 mm und der Radius 121 0,5 mm.

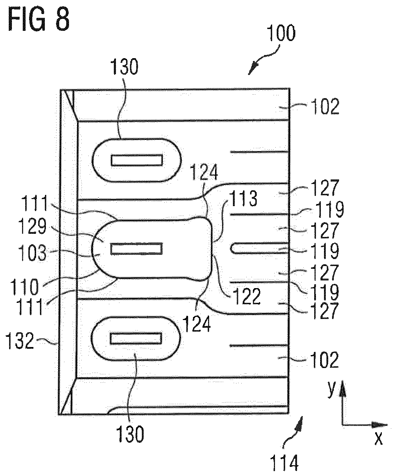

Gemäß weiteren Ausführungsformen ist im mittleren Bereich der Vorderseite 113 ein gerader Abschnitt 122 vorgesehen (Figuren 4 und 8). Die Größe des weiteren Radius 120 und die Größe des Radius 121 wird jeweils insbesondere vorgegeben in Abhängigkeit von der Breite 112 der Vorderseite 113. Die Breite 112 ist wiederum vorgegeben durch den Bauraum für das Heizgerät beziehungsweise die Heizleiterschicht 102 beziehungsweise den Kontaktbereich 129.

Die Breite 112 sowie der Radius 121, der weitere Radius 120 und der gemäß Ausführungsformen zwischen den gekrümmten Bereichen vorgesehene gerade Abschnitt 122 werden so vorgegeben, dass sich der Kontaktbereich 129 an den beiden Seiten der Vorderseite 113, die den Übergang zur Seite 111 bilden, in Richtung der jeweils zugeordneten Leiterbahnen 127 erstrecken. Der Kontaktbereich 129 ist somit so ausgebildet, dass er mit seiner Kontur einem Stromfluss folgt, der im Betrieb von der Kontaktfläche 107 durch die elektrisch leitfähige Schicht 103 zur Heizleiterschicht 102 gerichtet ist, insbesondere zu den beiden Heizkreisen der Heizleiterschicht 102. Die Kontur 110 wird dabei so vorgegeben, dass sich die Feldlinien in dem Kontaktbereich 129 möglichst nicht konzentrieren, sondern möglichst gleichmäßig verteilt sind. Somit wird eine geringe Stromdichte am Kontaktbereich 129 realisiert.

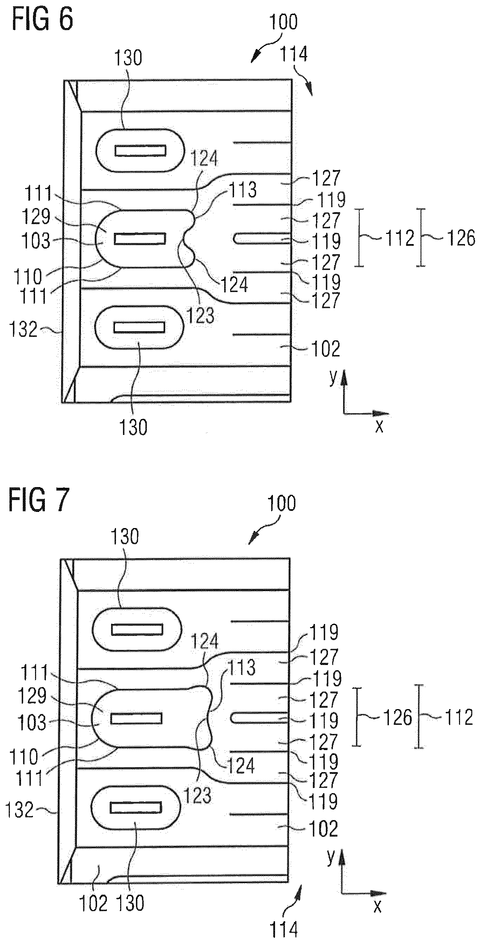

Figur 6 zeigt ein weiteres Ausführungsbeispiel der Kontur 110 des Kontaktbereichs 129. Die Breite 126 des Kontaktbereichs 130 ist in dieser Ausführungsform unverändert gleich der Breite 112 der Vorderseite 113.

Die Vorderseite 113 weist quer zur Längsrichtung 106 und zur Stapelrichtung 105 einen konvexen Abschnitt 124, daran anschließend einen konkaven Abschnitt 123 und einen weiteren konvexen Abschnitt 124 auf.

Durch diese Wölbung der Vorderseite 113 ist der Kontaktbereich 129 in Richtung der Leiterbahnen 127 ausgedehnt. Die konvexen Abschnitte 124 sind jeweils in Richtung des im Betrieb auftretenden Stromflusses gewölbt, wodurch die Stromdichte gering bleibt und somit ein Hitzestau vermieden wird. Die beiden konvexen Abschnitte 124 sind als vorspringende Bereiche in Richtung der Leiterbahnen 127 ausgebildet. Gemäß Ausführungsbeispielen weisen die konvexen Abschnitte 124 jeweils zumindest die zwei zueinander unterschiedlichen Radien 120 und 121 auf. Somit ändert sich jeweils die Krümmung entlang dem konvexen Abschnitt 124. Gemäß weiteren Ausführungsformen weisen die konvexen Abschnitte 124 jeweils einen einzigen Radius 121 auf. Somit ändert sich jeweils die Krümmung entlang dem konvexen Abschnitt 124 nicht.

Gemäß Ausführungsbeispielen weist der konkave Abschnitt 123 zumindest zwei zueinander unterschiedlichen Radien auf. Somit ändert sich die Krümmung entlang dem konkaven Abschnitt 123. Gemäß weiteren Ausführungsformen weist der konkave Abschnitt 123 einen einzigen Radius auf. Somit ändert sich die Krümmung entlang dem konkaven Abschnitt 123 nicht.

Figur 7 zeigt eine weitere Ausführungsform für die Kontur 110 des Kontaktbereichs 129. Vergleichbar zu der Ausführungsform der Figur 6 weist die Vorderseite 113 zwei konvexe Abschnitte 124 und den konkaven Abschnitt 123 auf, der zwischen den beiden konvexen Abschnitten 124 angeordnet ist. Im Unterschied zu Figur 6 ist die Breite 112 der Vorderseite 113 gemäß der Ausführungsform der Figur 7 breiter als die Breite 126 des Kontaktbereichs 126 in dem Abschnitt, der der Außenkante 132 zugewandt ist. Zudem ist die Seite 111 entlang der Längsrichtung länger als in Figur 6. Somit ist es möglich, den Kontaktbereich 129 näher an die Leiterbahnen 127 heranzuführen. Die Kontaktfläche 107 bleibt unverändert. Somit ist der Kontaktbereich 129 in Richtung des im Betrieb auftretenden Stromflusses zu den Leiterbahnen 127 geführt.

Figur 8 zeigt eine weitere Ausführungsform der Kontur 110 für den Kontaktbereich 129. Die Kontur 110 der Figur 8 entspricht im Wesentlichen der Kontur wie in Figur 7 dargestellt. Im Unterschied zur Figur 7 ist gemäß dem Ausführungsbeispiel der Figur 8 an der Vorderseite 113 der gerade verlaufende Abschnitt 122 zwischen den beiden konvexen Abschnitten 124 angeordnet. Auch in Zusammenhang mit der Kontur 110 gemäß Figur 8 weisen die konvexen Abschnitte 124 gemäß Ausführungsbeispielen jeweils zumindest die zwei zueinander unterschiedliche Radien 120 und 121 auf. Somit ändert sich jeweils die Krümmung entlang dem konvexen Abschnitt 124. Im Übergang von dem gerade verlaufenden Abschnitt 122 zu den Seiten 111 weist die Kontur 110 somit eine sich ändernde Krümmung auf. Gemäß weiteren Ausführungsformen weisen die konvexen Abschnitte 124 jeweils einen einzigen Radius 121 auf. Somit ändert sich jeweils die Krümmung entlang dem konvexen Abschnitt 124 nicht.

Somit ist es beispielsweise möglich, bei einer Dicke der Heizleiterschicht 102 von 20 µm in Stapelrichtung 105, einer Dicke des Kontaktbereichs 129 von 40 µm in Stapelrichtung 105, einer anliegenden Spannung von 400 V am Kontaktbereich 129, einer anliegenden Spannung von 0 V am Kontaktbereich 130 sowie einer durchschnittlichen Temperatur an der Heizleiterschicht 102 von 150 °C eine maximale Temperatur am Kontaktpad von weniger als 205 °C, insbesondere weniger als 200 °C, beispielsweise weniger als 196 °C, zu erreichen. Der heißeste Bereich ist im Betrieb beispielsweise an der Heizleiterschicht 102 unmittelbar an dem konvexen Abschnitt 124 des Kontaktbereichs 129. In diesem Bereich wird durch die vorgegebene Ausgestaltung der Kontur 110, mit entsprechender Abstimmung der Breite 112, der Radien 120 und 121 sowie den Abständen 116a, 116b und 116c erreicht, dass die maximale Temperatur um höchstens 60 °C höher ist als die mittlere Temperatur in der Heizleiterschicht 102. Dies wird erreicht, da die Kontur 110 so vorgegeben wird, dass ein möglichst gleichmäßiger Verlauf der Feldlinien des Stromflusses erreicht wird und dadurch Hitzestaus vermieden werden. Gemäß Ausführungsbeispielen wird die niedrigste maximale Temperatur am Kontaktbereich 129 erreicht, wenn der zweite Radius 121 möglichst klein ist. Beispielsweise ist der Radius 121 0,5 mm. Damit ergibt sich die kleinste maximale Temperatur für einen Radius 120 von 11 mm.

Neben den Krümmungsradien 120 und 121 spielt auch die Breite 112 der Vorderseite 113 eine Rolle. Bei kleinerem Radius 121 wird die Vorderseite 113 breiter und dadurch die Feldlinienkonzentration schwächer. Somit wird durch eine geringere Stromdichte weniger Wärme erzeugt. Damit wird insbesondere bei der Kontur 110, wie in Figur 8 dargestellt, eine maximale Temperatur von unter 195,1 °C ermöglicht. Bei einem Radius 121 von 1 mm wird beispielsweise bei einem Radius 120 von 11 mm eine maximale Temperatur von unter 201 °C ermöglicht.

Die Breite 113, der Radius 121 und/oder der Radius 120 sowie der Abstand 116 werden in Abhängigkeit voneinander vorgegeben. Entlang der Längsrichtung 106 weist der Kontaktbereich in der Projektion in Stapelrichtung 105 zumindest den Teilbereich 125 auf, in dem sich die Breite 126 des Kontaktbereichs 129 zu der Breite 112 vergrößert. Zudem ist der Übergang zwischen der Vorderseite 113 und den beiden Seiten 111 jeweils gekrümmt, insbesondere abgerundet. Die relativen Abmessungen zueinander können variieren, sind jedoch stets so vorgegeben, dass die Wirkung der geringen Stromdichte und damit der Vermeidung von Hitzestaus erreicht wird. Eine Vielzahl von zueinander verschiedenen Ausgestaltungen der Kontur 110 ist möglich, die jeweils stets mittels der der Breite 113, der Krümmung, insbesondere der Vorderseite 113 am Übergang zu den Seiten 111, und dem Abstand 116 vorgegeben sind und so ausgebildet sind, dass im Betrieb ein Hitzestau vermieden wird. Das Ergebnis der geringen Stromdichte und der damit einhergehenden Vermeidung von Hitzestaus kann beispielsweise mit verschiedenen Abwandlungen in Abhängigkeit der Breite 131 der Leiterbahn 127 erreicht werden, indem zunächst die Breite 112 der Vorderseite 113, davon abhängig die Radien 120 und 121 und davon abhängig der Abstand 116 ermittelt werden.

## Patentansprüche

1. Vorrichtung für ein Heizgerät für ein Fahrzeug, umfassend einen Schichtstapel (101), der in einer Stapelrichtung (105) aufweist:
- eine Heizleiterschicht (102),
- eine elektrisch leitfähige Schicht (103), die einen Kontaktbereich (129) ausbildet, wobei eine Kontur (110) in Projektion in der Stapelrichtung (105) der elektrisch leitfähigen Schicht (103) vorgegeben ist, um einen Hitzestau an der elektrisch leitfähigen Schicht (103) zu vermeiden, wobei die Kontur (110) durch einen vorgegebenen Abstand (116) zu einer Trennfuge (119) der Heizleiterschicht (102) vorgegeben ist und **dadurch gekennzeichnet,**
**dass** eine Vorderseite (113) der elektrisch leitfähigen Schicht (103), die einem Mittelbereich (114) der Heizleiterschicht (102) zugewandt ist, zwei konvexe Abschnitte (124) aufweist, die jeweils in Richtung des im Betrieb auftretenden Stromflusses gewölbt sind.

2. Vorrichtung nach Anspruch 1, bei der in einer Projektion in der Stapelrichtung (105) entlang der Vorderseite (113) eine vorgegebene Krümmung mittels zwei zueinander unterschiedlicher vorgegebener Radien (120; 121) für die Vorderseite (113) vorgegeben ist.

3. Vorrichtung nach Anspruch 1 oder 2, bei der in der Projektion in der Stapelrichtung (105) die Vorderseite (113) einen gerade verlaufenden Abschnitt (122) aufweist.

4. Vorrichtung nach einem der Ansprüche 1 bis 3, bei der in der Projektion in der Stapelrichtung (105) die Vorderseite einen konkaven (123) Abschnitt aufweist.

5. Vorrichtung nach einem der Ansprüche 1 bis 4, bei der:
- in der Projektion in der Stapelrichtung (105) sich eine Breite (126) der elektrisch leifähigen Schicht (103) ausgehend von der Breite (112) der Vorderseite (113) zumindest in einem Teilbereich (125) der elektrisch leitfähigen Schicht verjüngt.

6. Vorrichtung nach einem der Ansprüche 1 bis 5, aufweisend:
- einen Leitungsstreifen (104) aus einem elektrisch leitfähigen Material,
- eine Verbindung (109), die die elektrisch leitfähige Schicht (103) und den Leitungsstreifen (104) miteinander verbindet, um mittels des Leitungsstreifens (104) einen elektrischen und/oder mechanischen Kontakt an die elektrisch leitfähige Schicht (103) zu bilden.

7. Vorrichtung nach Anspruch 6, bei der die Verbindung (109) eine Schweißverbindung ist.

8. Vorrichtung nach Anspruch 6 oder 7, bei der der Leitungsstreifen (104) Kupfer aufweist.

9. Vorrichtung nach einem der Ansprüche 6 bis 8, bei der eine der Heizleiterschicht (102) abgewandte Fläche (115) der elektrisch leitfähigen Schicht (103) größer ist als eine Kontaktfläche (107), in der der Leitungsstreifen (104) in Kontakt ist mit der elektrisch leitfähigen Schicht (103).

10. Vorrichtung nach einem der Ansprüche 1 bis 9, bei der die elektrisch leitfähige Schicht (103) eine thermisch gespritzte elektrisch leitfähige Schicht (103) ist.

11. Vorrichtung nach einem der Ansprüche 1 bis 10, bei der die Heizleiterschicht (102) eine thermisch gespritzte Heizleiterschicht ist.

12. Vorrichtung nach einem der Ansprüche 1 bis 11, bei der die elektrisch leitfähige Schicht (103) Kupfer aufweist.

## Claims

1. Apparatus for a heating device for a vehicle, comprising a layer stack (101) which, in a stacking direction (105), has:
- a heating conductor layer (102),
- an electrically conductive layer (103) which forms a contact region (129), wherein a contour (110) in a projection in the stacking direction (105) of the electrically conductive layer (103) is prespecified, in order to prevent a hotspot on the electrically conductive layer (103), wherein the contour (110) is prespecified by a prespecified distance (116) from a joint (119) of the heating conductor layer (102), **characterized in that** a front side (113) of the electrically conductive layer (103), which front side faces a central region (114) of the heating conductor layer (102), has two convex sections (124) which are each curved in the direction of the current flow which occurs during operation.

2. Apparatus according to Claim 1, in which, in a projection in the stacking direction (105) along the front side (113), a prespecified curvature is prespecified by means of two prespecified radii (120; 121), which are different from one another, for the front side (113).

3. Apparatus according to Claim 1 or 2, in which, in the projection in the stacking direction (105), the front side (113) has a straight section (122).

4. Apparatus according to one of Claims 1 to 3, in which, in the projection in the stacking direction (105), the front side has a concave section (123).

5. Apparatus according to one of Claims 1 to 4, in which:
- in the projection in the stacking direction (105), a width (126) of the electrically conductive layer (103) tapers, starting from the width (112) of the front side (113), at least in a subregion (125) of the electrically conductive layer.

6. Apparatus according to one of Claims 1 to 5, having:
- a conduction strip (104) which is composed of an electrically conductive material,
- a connection (109) which connects the electrically conductive layer (103) and the conduction strip (104) to one another in order to form electrical and/or mechanical contact with the electrically conductive layer (103) by means of the conduction strip (104).

7. Apparatus according to Claim 6, in which the connection (109) is a welding connection.

8. Apparatus according to Claim 6 or 7, in which the conduction strip (104) comprises copper.

9. Apparatus according to one of Claims 6 to 8, in which an area (115) of the electrically conductive layer (103), which area is averted from the heating conductor layer (102), is larger than a contact area (107) in which the conduction strip (104) is in contact with the electrically conductive layer (103).

10. Apparatus according to one of Claims 1 to 9, in which the electrically conductive layer (103) is a thermally sprayed electrically conductive layer (103).

11. Apparatus according to one of Claims 1 to 10, in which the heating conductor layer (102) is a thermally sprayed heating conductor layer.

12. Apparatus according to one of Claims 1 to 11, in which the electrically conductive layer (103) comprises copper.

## Revendications

1. Dispositif destiné à un appareil de chauffage d'un véhicule, ledit dispositif comprenant un empilement de couches (101) qui présente dans une direction d'empilement (105) :
- une couche thermoconductrice (102),
- une couche électriquement conductrice (103) qui forme une zone de contact (129), un contour (110) étant spécifié en projection dans la direction d'empilement (105) de la couche électriquement conductrice (103) afin d'éviter une accumulation de chaleur au niveau de la couche électriquement conductrice (103), le contour (110) étant spécifié par une distance spécifiée (116) à une ligne de séparation (119) de la couche thermoconductrice (102) et **caractérisé en ce que** un côté avant (113) de la couche électriquement conductrice (103), qui est dirigé vers une zone médiane (114) de la couche thermoconductrice (102), comporte deux portions convexes (124) qui sont chacune incurvées dans la direction du flux de courant généré pendant le fonctionnement.

2. Dispositif selon la revendication 1, dans lequel, dans une projection dans la direction d'empilement (105) le long du côté avant (113), une courbure spécifiée est spécifiée au moyen de deux rayons spécifiés (120 ; 121) mutuellement différents pour le côté avant (113).

3. Dispositif selon la revendication 1 ou 2, dans lequel, dans la projection dans la direction d'empilement (105), le côté avant (113) comporte une portion (122) qui s'étend de manière rectiligne.

4. Dispositif selon l'une des revendications 1 à 3, dans lequel, dans la projection dans la direction d'empilement (105), le côté avant comporte une portion concave (123).

5. Dispositif selon l'une des revendications 1 à 4, dans lequel :
- dans la projection dans la direction d'empilement (105), une largeur (126) de la couche électriquement conductrice (103) se rétrécit à partir de la largeur (112) du côté avant (113), au moins dans une zone partielle (125) de la couche électriquement conductrice.

6. Dispositif selon l'une des revendications 1 à 5, comportant :
- une bande de conduction (104) en matière électriquement conductrice,
- une liaison (109) qui relie la couche électriquement conductrice (103) et la bande de conduction (104) l'une à l'autre pour former un contact électrique et/ou mécanique avec la couche électriquement conductrice (103) au moyen de la bande de conduction (104).

7. Dispositif selon la revendication 6, dans lequel la liaison (109) est une liaison soudée.

8. Dispositif selon la revendication 6 ou 7, dans lequel la bande de conduction (104) comporte du cuivre.

9. Dispositif selon l'une des revendications 6 à 8, dans lequel une surface (115), opposée à la couche thermoconductrice (102), de la couche électriquement conductrice (103) est plus grande qu'une surface de contact (107) dans laquelle la bande de conduction (104) est en contact avec la couche électriquement conductrice (103).

10. Dispositif selon l'une des revendications 1 à 9, dans lequel la couche électriquement conductrice (103) est une couche électriquement conductrice (103) projetée thermiquement.

11. Dispositif selon l'une des revendications 1 à 10, dans lequel la couche thermoconductrice (102) est une couche thermoconductrice projetée thermiquement.

12. Dispositif selon l'une des revendications 1 à 11, dans lequel la couche électriquement conductrice (103) comporte du cuivre.
